# EUROPEAN PATENT APPLICATION

(11) **EP 4 170 436 A1**
(43) Date of publication of application: **26.04.2023**
(21) Application number: 21853056.6
(22) Date of filing: 13.05.2021
(51) Int. Cl.: G04F 10/00, G01N 21/64

(54) **TIME MEASURING DEVICE, FLUORESCENCE LIFETIME MEASURING DEVICE, AND TIME MEASURING METHOD**

(30) Priority: 06.08.2020 JP 2020133839
(71) Applicant: Hamamatsu Photonics K.K., Hamamatsu-shi, Shizuoka 435-8558 (JP)
(72) Inventor: NIIKURA Fuminori, Hamamatsu-shi, Shizuoka 435-8558 (JP); YOSHIMI Ayumu, Hamamatsu-shi, Shizuoka 435-8558 (JP); KITAZAWA Ken, Hamamatsu-shi, Shizuoka 435-8558 (JP); INOUE Takayuki, Hamamatsu-shi, Shizuoka 435-8558 (JP)
(74) Representative: Hoffmann Eitle
(86) International application number: PCT/JP2021/018263
(87) International publication number: WO 2022/030062

(57) **Abstract**

A time measuring apparatus 10 includes a digital counter 20 that outputs a count signal in response to a clock signal, a plurality of TAC circuits 12 (TAC circuits 12a to 12j) to which a detection signal detected by a detector 4 and a clock signal are input and which output measurement signals corresponding to a time between the detection signal and the clock signal, a control unit 14 that derives and outputs time information related to the detection signal based on the count signal output from the digital counter 20 and the measurement signals output from the TAC circuits 12, and a measurement gate 11 that switches between the TAC circuits 12 to which the detection signal is input, in consideration of dead times of the TAC circuits 12.

## Description

### Technical Field

One aspect of the present invention relates to a time measuring apparatus, a fluorescence lifetime measuring apparatus, and a time measuring method.

### Background Art

In fluorescence lifetime measuring apparatuses and the like that measure the lifetime of fluorescence at the timing of irradiating samples with excitation light, a time measuring apparatus that outputs information related to a time difference between a start pulse signal and a stop pulse signal is used. As such a time measuring apparatus, a time measuring apparatus using a time-analog-converter (TAC) system that outputs a time difference as an analog signal is known (see, for example, Patent Literature 1). Compared to a time-digital-converter (TDC) system that measures a time by outputting a time difference as a digital signal, the TDC system has an advantage of a high time resolution.

### Citation List

### Patent Literature

[Patent Literature 1] Published Japanese Translation No. 2003-522946 of the PCT International Publication

### Summary of Invention

### Technical Problem

In the above-mentioned time measuring apparatus, when a time is measured by a TAC circuit (time-amplitude converter), a certain period of time after measurement is a dead time during which time measurement cannot be performed again. It is not possible to sufficiently improve measurement efficiency due to such a dead time. In addition, as described above, the TAC system has an advantage of a high time resolution, but it is difficult to measure a time for long time phenomena (long time measurement).

One aspect of the present invention has been made in view of the above circumstances, and an object thereof is to provide a time measuring apparatus, a fluorescence lifetime measuring apparatus, and a time measuring method which are capable of improving measurement efficiency by reducing a dead time, and realizing a high time resolution and long time measurement.

### Solution to Problem

A time measuring apparatus according to an aspect of the present invention includes a counter configured to output a count signal in response to a clock signal, a plurality of first time-amplitude converters to which a detection signal detected by a detector and the clock signal are input, and which output measurement signals corresponding to a time between the detection signal and the clock signal, a control unit configured to derive and output time information related to the detection signal based on the count signal output from the counter and the measurement signals output from the first time-amplitude converters, and a first switching unit configured to switch the first time-amplitude converter to which the detection signal is input, in consideration of dead times of the first time-amplitude converters.

The time measuring apparatus according to the aspect of the present invention is provided with the plurality of first time-amplitude converters that output measurement signals corresponding to the time between the detection signal and the clock signal. Further, in the time measuring apparatus, switching between the first time-amplitude converters to which the detection signal is input is executed in consideration of the dead times of the first time-amplitude converters. For example, in a case where a time is measured by only one time-amplitude converter, there is a dead time during which measurement cannot be performed again after the measurement is performed by the time-amplitude converter. In this regard, the time-amplitude converters are made to have a multi-stage configuration, and switching between the time-amplitude converters is performed in consideration of the dead times of the time-amplitude converters. Thus, the time-amplitude converter that cannot perform measurement again after the measurement is switched to a time-amplitude converter that can perform measurement, and thus it is possible to greatly reduce the above-mentioned dead times. Further, in the time measuring apparatus according to the aspect of the present invention, the counter operating in synchronization with a clock signal outputs a count signal so that rough time measurement (low time resolution and long time measurement) depending on the clock frequency is performed, and the first time-amplitude converter outputs a measurement signal corresponding to a time between a detection signal and the clock signal so that fine time measurement (high time resolution and short time measurement) for compensating for the measurement roughness of the counter is performed. Final time information is derived by combining these time measurement results, and thus it is possible to realize a high time resolution and long time measurement. As described above, according to the time measuring apparatus of the aspect of the present invention, it is possible to improve measurement efficiency by reducing dead times and realize a high time resolution and long time measurement.

The first switching unit may switch the first time-amplitude converters based on switching information which is preset in consideration of the dead times. According to such a configuration, it is possible to easily and appropriately switch the time-amplitude converters based on preset information (switching information taking dead times into consideration).

The control unit may derive the time information indicating a time until the detection signal is input by subtracting a time indicated by the measurement signal from a time corresponding to the count value indicated by the count signal. Thereby, it is possible to derive a time with higher accuracy until the detection signal is input, based on the count signal and the measurement signal.

The first switching unit may switch the first time-amplitude converters so that the detection signal is input to the first time-amplitude converter which is not in the dead time. Thereby, it is possible to appropriately avoid measurement efficiency deteriorating due to the influence of dead times of the first time-amplitude converters.

The plurality of first time-amplitude converters may be provided in a number corresponding to the dead times. Thereby, it is possible to appropriately avoid the influence of the dead times by switching between the first time-amplitude converters.

The plurality of first time-amplitude converters may be provided in a number corresponding to the amount of signals detected by the detector. Thereby, the first time-amplitude converters are provided in the number corresponding to the amount of signals, and it is possible to appropriately avoid the influence of dead times by switching between the first time-amplitude converters.

The time measuring apparatus described above may further include a second time-amplitude converter configured to output a signal corresponding to a synchronization signal of a phenomenon related to the detection signal detected by the detector, in which the control unit may derive the time information further in consideration of the signal corresponding to the synchronization signal. Thereby, it is possible to derive time information related to the detection signals with higher accuracy in consideration of the actual timing of the phenomenon related to the detection signals.

The time measuring apparatus described above may further include a plurality of second time-amplitude converters, and a second switching unit configured to switch the second time-amplitude converters to which the synchronization signal is input, in consideration of dead times of the second time-amplitude converters. Thereby, it is possible to appropriately avoid measurement efficiency deteriorating due to the influence of dead times of the second time-amplitude converters.

A fluorescence lifetime measuring apparatus according to an aspect of the present invention is a fluorescence lifetime measuring apparatus that measures a lifetime of fluorescence emitted from a measurement target, the fluorescence lifetime measuring apparatus including the time measuring apparatus described above, a light source configured to irradiate the measurement target with generated light, the detector configured to detect the fluorescence from the measurement target irradiated with the light from the light source and output the detection signal, and a signal generation unit configured to control the output of light from the light source and output synchronization signals synchronized with the light source and the time measuring apparatus. According to such a fluorescence lifetime measuring apparatus, it is possible to efficiently measure fluorescence lifetime by using the time measuring apparatus described above and realize a high time resolution and long time measurement for the measurement of the fluorescence lifetime.

A time measuring method according to an aspect of the present invention is a time measuring method performed by a time measuring apparatus that measures a time while switching between a plurality of time-amplitude converters, the time measuring method including selecting one time-amplitude converter to which a detection signal detected by a detector is input, based on a dead time of each of the plurality of time-amplitude converters, inputting the detection signal and a clock signal to the selected one time-amplitude converter to obtain a measurement signal corresponding to a time between the detection signal and the clock signal, and deriving and outputting time information related to the detection signal based on the count signal corresponding to the clock signal and the measurement signal. According to such a time measuring method, it is possible to improve measurement efficiency by reducing dead times and realize a high time resolution and long time measurement.

In the time measuring method described above, the selecting of the one time-amplitude converter may include selecting the time-amplitude converter which is not in the dead time. Thereby, it is possible to appropriately avoid measurement efficiency deteriorating due to the influence of a dead time.

### Advantageous Effects of Invention

According to an aspect of the present invention, it is possible to improve measurement efficiency by reducing a dead time and realize a high time resolution and long time measurement.

### Brief Description of Drawings

FIG. 1 is a diagram schematically illustrating a fluorescence lifetime measuring apparatus according to the present embodiment.
FIG. 2 is a diagram illustrating multi-TAC measurement.
FIG. 3 is a diagram illustrating multi-TAC measurement.
FIG. 4 is a diagram illustrating derivation of time information.
FIG. 5 is a diagram illustrating derivation of time information.
FIG. 6 is a diagram illustrating derivation of time information.
FIG. 7 is a diagram schematically illustrating an example of a time measuring apparatus according to a modification example.

### Description of Embodiments

Hereinafter, embodiments of a time measuring apparatus, a time measuring method, and a fluorescence lifetime measuring apparatus according to an aspect of the present invention will be described in detail with reference to the drawings.

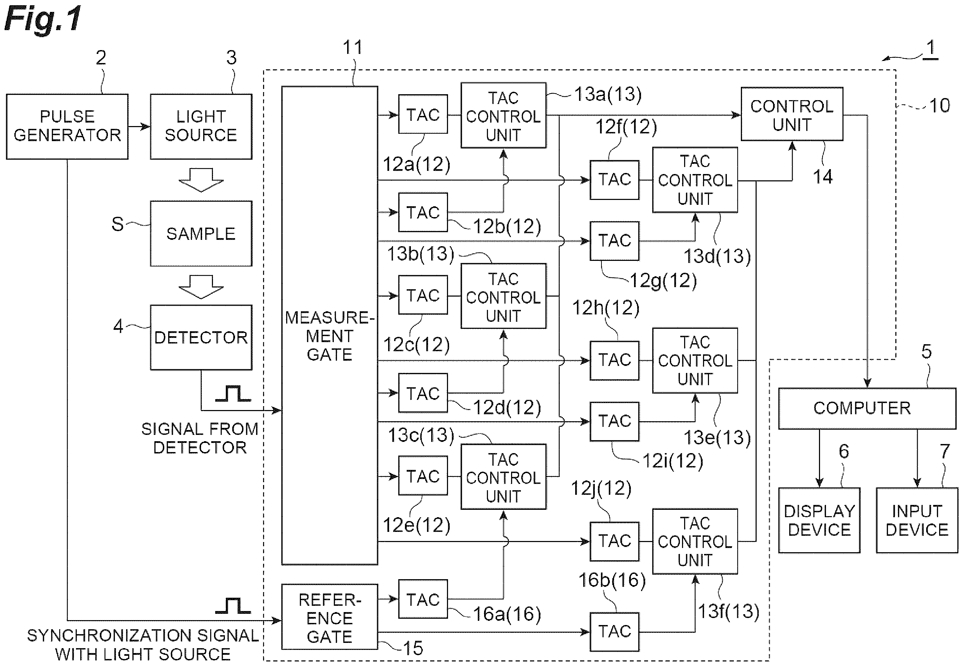

FIG. 1 is a diagram schematically illustrating a fluorescence lifetime measuring apparatus 1 according to the present embodiment. The fluorescence lifetime measuring apparatus 1 is a apparatus that measures the lifetime of fluorescence emitted from a sample S (measurement target).

Fluorescence spectra of organic materials and fluorescence probes are important parameters for controlling and evaluating the functions and characteristics of samples, such as a peak wavelength and fluorescence intensity. However, fluorescence spectra acquire temporally integrated information, and thus in a case where a sample contains a plurality of substances or reaction systems, only the integrated information can be obtained. In such a case, as means for evaluating the function and characteristics of a sample, fluorescence lifetime measurement for measuring a time required for the sample to return to a ground state after being photoexcited by pulsed light in a time domain of sub-nanoseconds to milliseconds is effective. In the fluorescence lifetime measuring apparatus 1 according to the present embodiment, a fluorescence detection timing is derived by a time measuring apparatus 10 to be described below, the frequency distribution of the detection timing is obtained by detecting fluorescence a plurality of times, and the fluorescence lifetime of a sample S is estimated based on the frequency distribution.

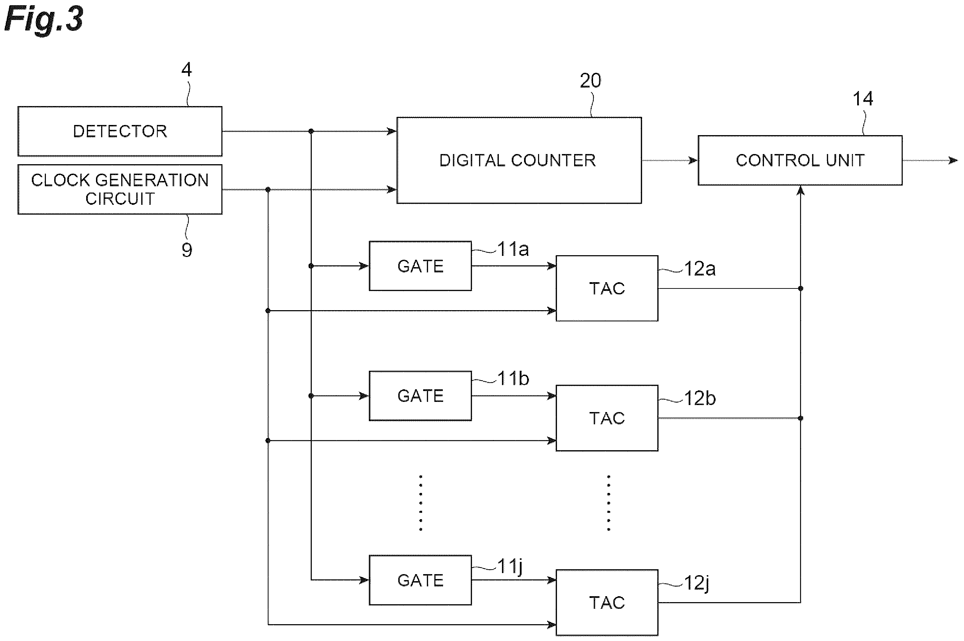

As illustrated in FIG. 1, the fluorescence lifetime measuring apparatus 1 is configured to include a pulse generator 2 (signal generation unit), a light source 3, a detector 4, a computer 5, a display apparatus 6, an input apparatus 7, and a time measuring apparatus 10. Note that, in FIG. 1, a clock generation circuit 9 (see FIG. 3), which will be described later, in the configuration of the fluorescence lifetime measuring apparatus 1 is not illustrated.

The pulse generator 2 outputs pulse signals synchronized with (for example, at the same timing as) the light source 3 and a reference gate 15 (details will be described later) of the time measuring apparatus 10 based on an instruction received from the computer 5. The pulse generator 2 controls the output of light from the light source 3 and outputs the control signal as a pulse signal. The reference gate 15 outputs a synchronization signal to a TAC circuit 16a or a TAC circuit 16b based on the pulse signal (details will be described later). Since the pulse signals are input to the light source 3 and the reference gate 15 at the same timing, the synchronization signal output from the reference gate 15 is a signal corresponding to (synchronized with) the irradiation of light (excitation light) from the light source 3.

The light source 3 outputs excitation light emitted to the sample S based on the pulse signals output from the pulse generator 2. As the light source 3, a light emitting diode (LED) light source, a laser light source, a super luminescent diode (SLD) light source, a lamp-based light source, or the like can be used. The intensity of the excitation light may be set, for example, to the extent that one photon is emitted when the sample S is irradiated with the excitation light. Fluorescence corresponding to the excitation light is output from the sample S irradiated with the excitation light.

The detector 4 detects fluorescence from the sample S and outputs a detection signal to a measurement gate 11 (details will be described later) of the time measuring apparatus 10. As the detector 4, a photomultiplier tube, an avalanche photodiode, a PIN photodiode, or the like can be used.

The computer 5 derives a fluorescence lifetime based on the measurement results output from the time measuring apparatus 10 (in more detail, the control unit 14). Specifically, the computer 5 derives the frequency distribution of a fluorescence detection timing from time information of fluorescence (fluorescence detection timings) included in the measurement results, and obtains the fluorescence lifetime of the sample S from the frequency distribution. The computer 5 is constituted by an arithmetic operation unit such as a CPU and a storage unit such as a RAM or a flash memory. Note that the computer 5 may take charge of the function of the control unit 14 of the time measuring apparatus 10.

The display apparatus 6 is a display electrically coupled to the computer 5, and displays analysis results for the fluorescence lifetime of the sample S described above. The input apparatus 7 is a keyboard, a mouse, or the like, and can input and set analysis conditions and measurement conditions for the fluorescence lifetime.

The time measuring apparatus 10 is a time measuring apparatus that calculates a time from when a first trigger signal is input to when a second trigger signal is input as a measurement time. The time measuring apparatus 10 can be applied to various apparatuses and systems that derive a difference in input timing between two signals (the first trigger signal and the second trigger signal) input at different timings from the two signals. In the present embodiment, as described above, the time measuring apparatus 10 is applied to the fluorescence lifetime measuring apparatus 1 that measures the lifetime of fluorescence emitted from the sample S.

As illustrated in FIG. 1, the time measuring apparatus 10 includes the measurement gate 11 (first switching unit), a time-analog-converter (TAC) circuit 12 (first time-amplitude converter), a TAC control unit 13, the control unit 14, the reference gate 15 (second switching unit), and a TAC circuit 16 (second time-amplitude converter). In more detail, the time measuring apparatus 10 includes a plurality of TAC circuits 12a to 12j as the TAC circuit 12, a plurality of TAC control units 13a to 13f as the TAC control unit 13, and a plurality of TAC circuits 16a and 16b as the TAC circuit 16. The plurality of TAC circuits 12a to 12j are coupled in parallel to the measurement gate 11, and the plurality of TAC circuits 16a and 16b are coupled in parallel to the reference gate 15. Note that, in FIG. 1, a digital counter 20 (see FIG. 3), which will be described later, in the configuration of the time measuring apparatus 10 is not illustrated. The digital counter 20 may be provided in the TAC control unit 13 or may be provided separately from the TAC control unit 13.

The TAC circuit 12 is a circuit of a time-amplitude converter circuit that outputs a time difference between the input of the first trigger signal and the input of the second trigger signal as an analog signal (amplitude). The TAC circuit 12 is configured to be able to measure, for example, a time of 10 ns. Specifically, the TAC circuit 12 outputs a detection signal detected by the detector 4 as a first trigger signal, outputs a clock signal output from the clock generation circuit 9 (see FIG. 3) as a second trigger signal, and outputs an analog signal (amplitude) corresponding to a time between the detection signal and the clock signal as a measurement signal to the TAC control unit 13. That is, the TAC circuit 12 receives inputs of the detection signal detected by the detector 4 and the clock signal, and outputs the measurement signal corresponding to the time between the detection signal and the clock signal. The TAC circuit 12 receives the detection signal input through the measurement gate 11.

The TAC control unit 13 is an AD converter that converts the analog signal (amplitude), which is the measurement signal input from the TAC circuit 12, into a digital signal. The TAC control unit 13 outputs the digital signal after the AD conversion as a measurement signal to the control unit 14. As described above, the time measuring apparatus 10 includes the plurality of TAC control units 13a to 13f as the TAC control unit 13. As illustrated in FIG. 1, the TAC control unit 13a receives measurement signals input from the TAC circuits 12a and 12b, the TAC control unit 13b receives measurement signals input from TAC circuits 12c and 12d, the TAC control unit 13c receives measurement signals input from the TAC circuits 12e and 16a, the TAC control unit 13d receives measurement signals input from the TAC circuits 12f and 12g, the TAC control unit 13e receives measurement signals input from the TAC circuits 12h and 12i, and the TAC control unit 13f receives measurement signals input from the TAC circuits 12j and 16b.

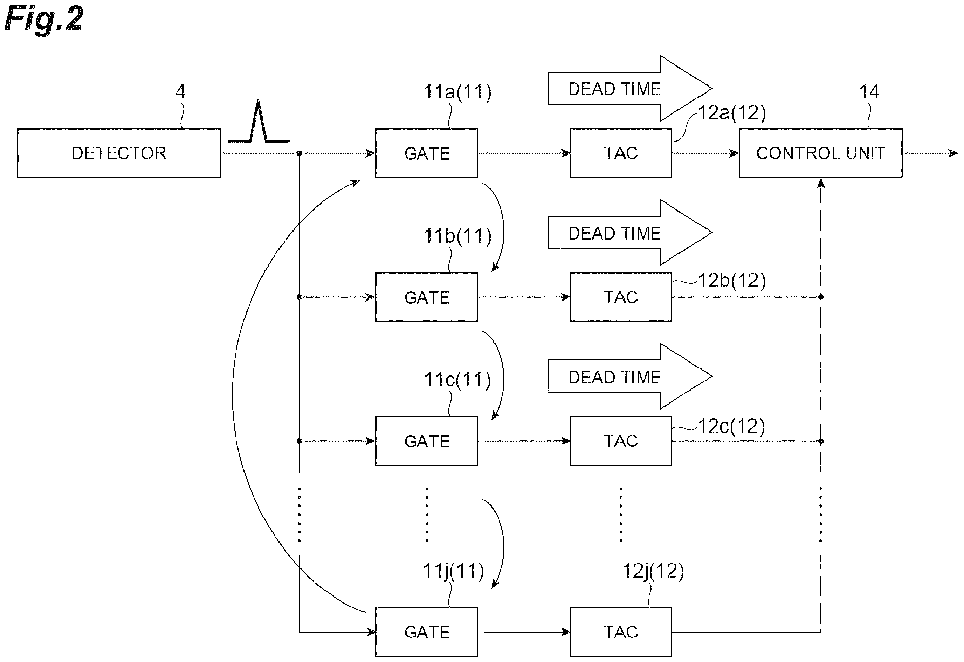

The measurement gate 11 receives the input of the detection signal, which is the first trigger signal, from the detector 4 and outputs the detection signal to the TAC circuit 12. In detail, the measurement gate 11 outputs the detection signal input from the detector 4 to only one TAC circuit 12 among the plurality of TAC circuits 12a to 12j. FIGS. 2 and 3 are diagrams illustrating multi-TAC measurement. Here, the multi-TAC measurement is a measuring method that uses the plurality of TAC circuits 12a to 12j while switching between them.

As illustrated in FIG. 2, the measurement gate 11 includes a plurality of gate circuits 11a to 11j provided in front of the TAC circuits 12a to 12j so as to correspond to the plurality of TAC circuits 12a to 12j on a one-to-one basis. Only one of the plurality of gate circuits 11a to 11j of the measurement gate 11 is validated (a state where the input of the detection signal is received). The gate circuits 11a to 11j that are not validated are set to be in a standby state (a state where the input of the detection signal is not received). The measurement gate 11 switches between the validated gate circuits 11a to 11j so that the detection signal is input to only one of the plurality of TAC circuits 12a to 12j.

The measurement gate 11 switches the TAC circuits 12a to 12j to which the detection signal is input, in consideration of dead times of the plurality of TAC circuits 12a to 12j. Here, the dead times are times during which time measurement cannot be performed again for a certain period of time after a time is measured in the TAC circuit 12. The TAC circuits 12a to 12j have the same performance and have the same degree of dead time. Note that the dead times of the TAC circuits 12a to 12j may be different from each other. For example, in the example illustrated in FIG. 2, the measurement gate 11 first validates the gate circuit 11a and sets the other gate circuits 11b to 11j to be in a standby state. In this state, when a detection signal is input to the measurement gate 11 from the detector 4, the detection signal is input to only the gate circuit 11a, and the detection signal is input to the TAC circuit 12a via the gate circuit 11a. The TAC circuit 12a outputs a measurement signal corresponding to a time between the detection signal and the clock signal. A certain period of time after the processing for outputting the measurement signal is a dead time during which the TAC circuit 12a cannot perform time measurement again. For this reason, the measurement gate 11 validates the second gate circuit 11b and sets the other gate circuits 11a and 11c to 11j in a standby state. In this state, when a detection signal is input to the measurement gate 11 from the detector 4, the detection signal is input to only the gate circuit 11b, and the detection signal is input to the TAC circuit 12b via the gate circuit 11b. Then, a dead time is also set for the TAC circuit 12b similar to the TAC circuit 12a, and thus the measurement gate 11 subsequently validates the third gate circuit 11c and sets the other gate circuits 11a, 11b, and 11d to 11j to be in a standby state. In this manner, the measurement gate 11 sequentially validates only one of the gate circuits 11a to 11j corresponding to the TAC circuits 12a to 12j to sequentially switches the TAC circuits 12a to 12j to which a detection signal is input. According to this method, a dead time during which photons are missed is not a dead time of the TAC circuit 12 (a dead time during TAC processing), but only a switching time of the gate circuits 11a to 11j. Since the dead time during the TAC processing is, for example, 150 ns, and the switching time of the gate circuit is, for example, 1 ns, it is possible to greatly shorten a dead time during which photons are missed by using the method.

The measurement gate 11 switches the TAC circuits 12a to 12j to which a detection signal is input, based on switching information which is preset in consideration of dead times. The switching information is information that specifies the order of switching between the TAC circuits 12a to 12j (the order in which the gate circuits 11a to 11j are validated) so that a detection signal is not input to the TAC circuits 12a to 12j during a dead time. That is, the measurement gate 11 switches between the TAC circuits 12a to 12j so that a detection signal is input to the TAC circuits 12a to 12j that are not in a dead time. As a prerequisite for validating such switching, the plurality of TAC circuits 12a to 12j are provided by the number corresponding to the dead times of the TAC circuits 12. The number corresponding to the dead times is the number by which a detection signal is not input to the TAC circuit 12 during a dead time when switching of the TAC circuit 12 is performed so that a detection signal is sequentially input to the TAC circuits 12. In addition, the plurality of TAC circuits 12a to 12j are provided by the number corresponding to a signal amount detected by the detector 4. The number corresponding to a signal amount detected by the detector 4 is the number by which a detection signal is not input to the TAC circuit 12 during a dead time when switching of the TAC circuit 12 is performed so that a detection signal is sequentially input to the TAC circuits 12 even when a detection signal is input with a maximum signal amount to be assumed.

The control unit 14 derives and outputs time information related on a detection signal detected by the detector 4, based on a count signal output from the digital counter 20 (see FIG. 3) and a measurement signal output from the TAC circuit 12 and converted into a digital signal by the TAC control unit 13. As illustrated in FIG. 3, the digital counter 20 is a counter to which a detection signal from the detector 4 and a clock signal from the clock generation circuit 9 are input. The digital counter 20 operates in synchronization with the clock signal and outputs the count signal to the control unit 14 in accordance with the clock signal (by counting the clock signal). Although the digital counter 20 can perform long time measurement for a detection signal, it is difficult to increase a time resolution. The control unit 14 combines a time measurement result of the digital counter 20 and a time measurement result of the TAC circuit 12 with a high time resolution to achieve high time resolution and long time measurement of time information related to the detection signal.

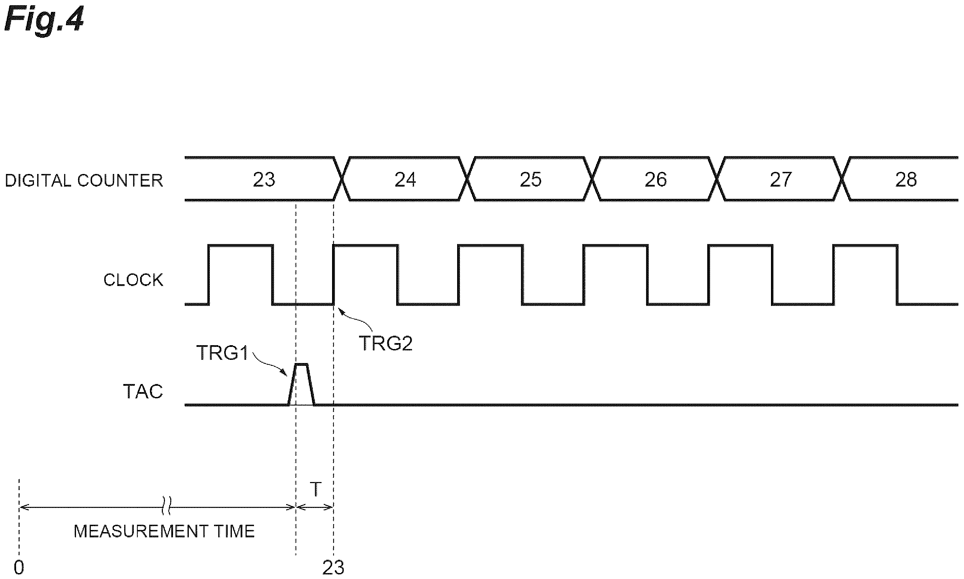

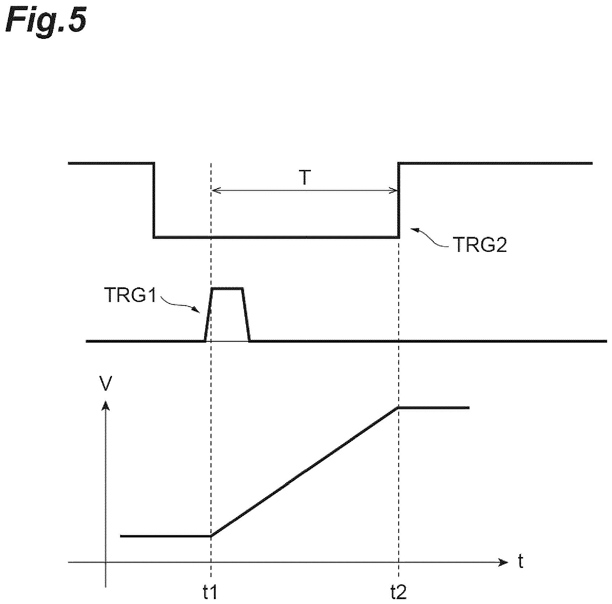

FIGS. 4 to 6 are diagrams illustrating the derivation of the time information described above. In FIGS. 4 to 6, the horizontal axis indicates a time axis. As illustrated in FIG. 4, the digital counter 20 counts clock signals and outputs a count signal. FIG. 4 illustrates an example in which the digital counter 20 outputs count signals indicating 23, 24, 25, 26, 27, and 28. As described above, the digital counter 20 operates in synchronization with a clock signal. In addition, as illustrated in FIG. 4, now, it is assumed that the TAC circuit 12 measures a time difference T between the input of a detection signal TRG1 from the detector 4 and the input of a clock signal TRG2 immediately after the detection signal TRG1. In the measurement signal output by the TAC circuit 12, as illustrated in FIG. 5, a voltage (amplitude) is started to increase in response to the detection signal TRG1 from a timing (time 11) when the detection signal TRG1 is input, and a voltage (amplitude) becomes constant in response to the clock signal TRG2 from a timing (time t2) when the clock signal TRG2 is input.

The control unit 14 derives time information indicating a time until a detection signal is input to the TAC circuit 12 by subtracting a time indicated by the measurement signal from a time corresponding to a count value indicated by the count signal. That is, in the example illustrated in FIG. 4, the control unit 14 derives time information (23-T) indicating a time until the detection signal TRG1 is input to the TAC circuit 12 by subtracting a time difference T, which is time information indicated by the measurement signal, from 23 which is the time corresponding to the count value indicated by the count signal. Such time information can be derived by correspondence of the clock signal input to the digital counter 20 and the clock signal input to the TAC circuit 12 (the count value indicated by the clock signal input to the TAC circuit 12 is uniquely determined).

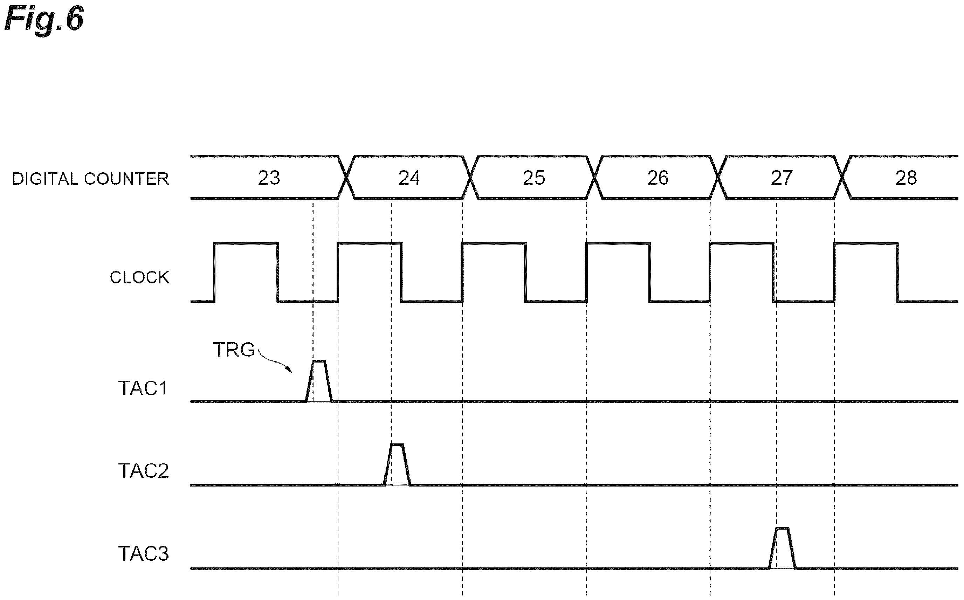

The control unit 14 derives time information based on information from each of the TAC circuits 12 in a configuration in which the plurality of TAC circuits 12 are switched, and thus it is possible to appropriately perform time measurement also in the case of multiphotons. In the example illustrated in FIG. 6, after time information of the TAC circuit 12 (denoted as TAC1 in FIG. 6) to which the detection signal is input first is derived, time information of the TAC circuit 12 (denoted as TAC2 in FIG. 6) to which the detection signal is input second is derived, and time information of the TAC circuit 12 (denoted as TAC3 in FIG. 6) to which the detection signal is input third is derived. That is, in the example illustrated in FIG. 6, the control unit 14 derives time information related to a measurement result of TAC1 by subtracting time information indicated by a measurement signal output by TAC1 from 23 which is the time corresponding to the count value indicated by the count signal, derives time information related to a measurement result of TAC2 by subtracting time information indicated by a measurement signal output by TAC2 from 24 which is the time corresponding to the count value indicated by the count signal, and derives time information related to a measurement result of TAC3 by subtracting time information indicated by a measurement signal output by TAC3 from 27 which is the time corresponding to the count value indicated by the count signal. The control unit 14 outputs the derived time information (measurement results) to the computer 5.

The TAC circuit 16 is a circuit of a time-amplitude converter that outputs a time difference between the input of a first trigger signal and the input of a second trigger signal as an analog signal (amplitude). The TAC circuit 16 outputs a signal corresponding to a synchronization signal of a phenomenon associated with a detection signal detected by the detector 4. The phenomenon associated with the detection signal detected by the detector 4 is fluorescence from the sample S detected by the detector 4. The synchronization signal of the phenomenon is a synchronization signal output to the TAC circuit 16 by the reference gate 15 based on a pulse signal output by the pulse generator 2 at a timing synchronized with (for example, the same) the light source 3 and the reference gate 15. That is, the synchronization signal mentioned here is a signal synchronized with excitation light emitted to the sample S from the light source 3 with respect to fluorescence detection. Specifically, the TAC circuit 16 outputs a synchronization signal input from the reference gate 15 as a first trigger signal, outputs a clock signal output from the clock generation circuit 9 as a second trigger signal, outputs an analog signal (amplitude) corresponding to a time difference between the synchronization signal and the clock signal as a signal corresponding to the above-mentioned synchronization signal to the TAC control unit 13. The time measuring apparatus 10 includes two TAC circuits 16a and 16b as the TAC circuit 16. The TAC circuit 16a outputs a signal corresponding to the above-mentioned synchronization signal to the TAC control unit 13c. In addition, the TAC circuit 16b outputs a signal corresponding to the above-mentioned synchronization signal to the TAC control unit 13f. The TAC control units 13c and 13f converts signals input from the TAC circuits 16a and 16b into digital signals and output the digital signals to the control unit 14. Then, the control unit 14 may derive time information in consideration of a signal corresponding to the above-mentioned synchronization signal. That is, the control unit 14 may specify a start timing (start point) of the phenomenon from the signal corresponding to the above-mentioned synchronization signal, and derive time information related to the detection signal detected by the detector 4 with higher accuracy.

The reference gate 15 switches between the TAC circuits 16a and 16b to which the above-mentioned synchronization signal is input, in consideration of dead times of the TAC circuits 16. The reference gate 15 receives the pulse signal input from the pulse generator 2 and outputs a synchronization signal corresponding to the pulse signal to only one of the TAC circuits 16a and 16b. The reference gate 15 switches between the TAC circuits 16a and 16b to which a synchronization signal is input, based on switching information which is preset in consideration of dead times. The switching information is specified such that a synchronization signal is not input to the TAC circuits 16a and 16b during a dead time.

Next, operations and effects of the time measuring apparatus 10 according to the present embodiment and the fluorescence lifetime measuring apparatus 1 including the time measuring apparatus 10 will be described.

The time measuring apparatus 10 according to the present embodiment includes the digital counter 20 that outputs a count signal in response to a clock signal, the plurality of TAC circuits 12 (TAC circuits 12a to 12j) to which detection signals detected by the detector 4 and the clock signal are input and which output measurement signals corresponding to times between the detection signals and the clock signal, the control unit 14 that derives and outputs time information related to the detection signals based on the count signal output from the digital counter 20 and the measurement signals output from the TAC circuits 12, and the measurement gate 11 that switches between the TAC circuits 12 to which the detection signals are input in consideration of the dead times of the TAC circuits 12.

Such a time measuring apparatus 10 is provided with the plurality of TAC circuits 12 that output measurement signals corresponding to times between the detection signals and the clock signal. In addition, the time measuring apparatus 10 executes switching between the TAC circuits 12 to which the detection signals are input, in consideration of dead times of the TAC circuits 12. For example, in a case where a time is measured by only one TAC circuit 12, a dead time during which measurement cannot be performed again after measurement is performed by the TAC circuit 12. In this regard, the TAC circuits 12 are configured as a multi-stage, and switching between the TAC circuits 12 is performed in consideration of the dead times of the TAC circuits 12. Thus, the TAC circuit 12 that cannot perform measurement again after the measurement is switched to the TAC circuit 12 that can perform measurement, and thus it is possible to greatly reduce the above-mentioned dead times. Further, in the TAC circuit 12 according to the present embodiment, the digital counter 20 operating in synchronization with a clock signal outputs a count signal so that rough time measurement (low time resolution and long time measurement) depending on the clock frequency is performed, and the TAC circuit 12 outputs a measurement signal corresponding to a time between a detection signal and the clock signal so that fine time measurement (high time resolution and short time measurement) for compensating for the measurement roughness of the digital counter 20 is performed. Final time information is derived by combining these time measurement results, and thus it is possible to realize a high time resolution and long time measurement. As described above, according to the time measuring apparatus 10 of the present embodiment, it is possible to improve measurement efficiency by reducing dead times and realize a high time resolution and long time measurement. An example of a time resolution of the time measuring apparatus 10 is 0.25 ps, and an example of long time measurement is 24 hours or more. Note that the time resolution mentioned here is a unit of measurement and does not indicate a time resolution of the entire measurement system.

For example, in a case where an organic EL light emitting material such as TADF is photoexcited, light emission of the ns order and light emission of the ms order may occur. In this manner, in a case where light emission having attenuation characteristics with an extremely large time unit difference occurs, a measuring apparatus capable of performing long time measurement while maintaining a high time resolution is required in order to efficiently perform fluorescence lifetime measurement. In such fluorescence lifetime measurement and the like, the time measuring apparatus 10 that realizes a high time resolution and long time measurement according to the present embodiment can be effectively used. Note that a measurement target of the time measuring apparatus 10 is not limited to the TADF described above, and may include other phosphors and targets of various phenomena other than a light emission phenomenon.

In addition, the time measuring apparatus 10 described above performs time measurement by switching between the plurality of TAC circuits 12, and thus time measurement can be performed with a higher amount of light (for example, approximately 10 times the amount of light) than in the related art, for example, in fluorescence lifetime measurement. In a case where the light emission intensity of a sample is strong, measurement has been performed in the related art by greatly attenuating light emission using a filter, and time measurement is performed in a state where there is a large signal loss, but according to the time measuring apparatus 10, it is possible to perform time measurement with high accuracy while suppressing a signal loss.

The measurement gate 11 may switch the TAC circuit 12 based on switching information which is preset in consideration of dead times. According to such a configuration, it is possible to easily and appropriately switch the TAC circuit 12 based on preset information (switching information taking dead times into consideration).

The control unit 14 may derive time information indicating a time until a detection signal is input by subtracting a time indicated by a measurement signal from a time corresponding to a count value indicated by a count signal. Thereby, it is possible to derive a time with high accuracy until the detection signal is input, based on the count signal and the measurement signal.

The measurement gate 11 may switch the TAC circuit 12 so that a detection signal is input to the TAC circuit 12 which is not in a dead time. Thereby, it is possible to appropriately avoid measurement efficiency deteriorating due to the influence of dead times of the TAC circuits 12.

The plurality of TAC circuits 12 may be provided by the number corresponding to dead times. Thereby, it is possible to appropriately avoid the influence of the dead times by switching between the TAC circuits 12.

The plurality of TAC circuits 12 may be provided by the number corresponding to the amount of signals detected by the detector 4. Thereby, the TAC circuits 12 are provided by the number corresponding to the amount of signals, and it is possible to appropriately avoid the influence of dead times by switching between the TAC circuits 12.

The time measuring apparatus 10 further includes the plurality of TAC circuits 16 (TAC circuits 16a and 16b) that output signals corresponding to a synchronization signal of a phenomenon related to detection signals detected by the detector 4, and the control unit 14 may derive time information further in consideration of a signal corresponding to the synchronization signal. Thereby, it is possible to derive time information related to the detection signals with higher accuracy in consideration of the actual timing of the phenomenon related to the detection signals.

The time measuring apparatus 10 may further include the reference gate 15 that switches the TAC circuit 16 to which a synchronization signal is input, in consideration of dead times of the TAC circuits 16. Thereby, it is possible to appropriately avoid measurement efficiency of a reference signal deteriorating due to the influence of dead times of the TAC circuits 16.

The fluorescence lifetime measuring apparatus 1 according to the present embodiment is a fluorescence lifetime measuring apparatus that measures the lifetime of fluorescence emitted from the sample S, and includes the time measuring apparatus 10 described above, the light source 3 that irradiates the sample S with generated light, the detector 4 that detects fluorescence from the sample S irradiated with light from the light source 3 and outputs a detection signal, and the pulse generator 2 that controls the output of light from the light source 3 and outputs synchronization signals synchronized with the light source 3 and the time measuring apparatus 10. According to such a fluorescence lifetime measuring apparatus 1, it is possible to efficiently measure fluorescence lifetime by using the time measuring apparatus 10 described above and realize a high time resolution and long time measurement for the measurement of the fluorescence lifetime.

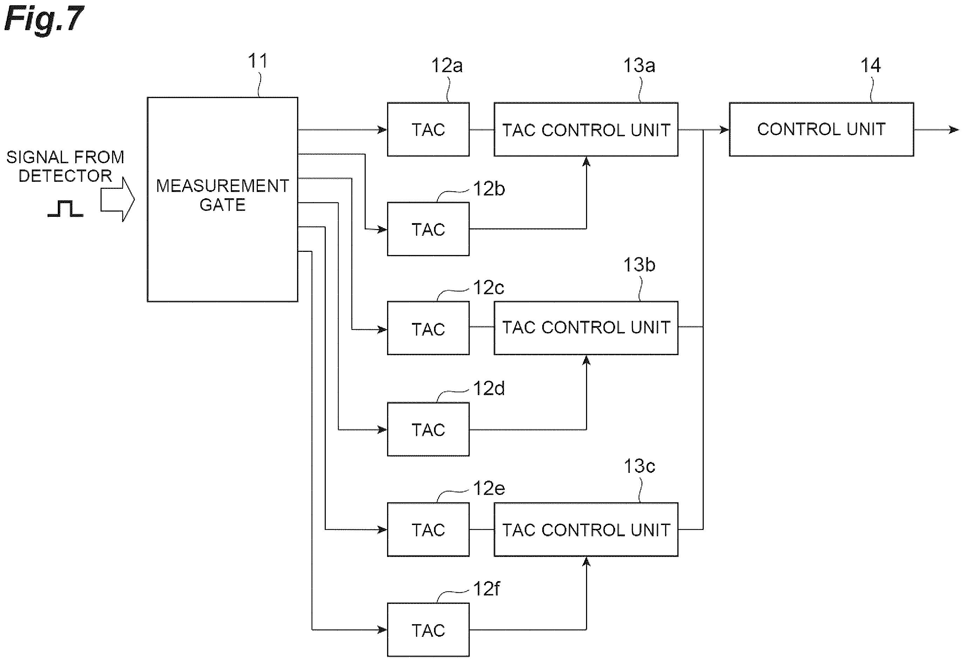

Although an embodiment of the present invention has been described above, the present invention is not limited to the above-described embodiment. For example, the description has been given on the assumption that the time measuring apparatus 10 includes the TAC circuit 16 and the reference gate 15 related to a synchronization signal, but in a case where a timing of a phenomenon of a time measurement target (a repetition timing or the like) can be ascertained, a configuration in which the TAC circuit 16 and the reference gate 15 are not provided may be adopted as illustrated in FIG. 7.

In addition, the number of TAC circuits 12 is not also limited to the number (eight) described in the embodiment, and may be, for example, six (the TAC circuits 12a to 12f) or the like as illustrated in FIG. 7 or may be other numbers. An appropriate number of TAC circuits 12 may be preferably changed in accordance with a fluorescence lifetime value to be measured, for example, in the case of fluorescence lifetime measurement. For example, in a case where the fluorescence lifetime value to be measured is 5 µs or less, the number of TAC circuits 12 is eight (or less), and in a case where the fluorescence lifetime value to be measured is greater than 5 µs, nine or more TAC circuits 12 may be provided.

### Reference Signs List

1 Fluorescence lifetime measuring apparatus
2 Pulse generator (signal generation unit)
3 Light source
4 Detector
10 Time measuring apparatus
11 Measurement gate (first switching unit)
12 TAC circuit (first time-amplitude converter)
14 Control unit
15 Reference gate (second switching unit)
16 TAC circuit (second time-amplitude converter)
20 Digital counter (counter)
S Sample (measurement target)

## Claims

1. A time measuring apparatus comprising:
a counter configured to output a count signal in response to a clock signal;
a plurality of first time-amplitude converters to which a detection signal detected by a detector and the clock signal are input, and which output measurement signals corresponding to a time between the detection signal and the clock signal;
a control unit configured to derive and output time information related to the detection signal based on the count signal output from the counter and the measurement signals output from the first time-amplitude converters; and
a first switching unit configured to switch the first time-amplitude converter to which the detection signal is input, in consideration of dead times of the first time-amplitude converters.

2. The time measuring apparatus according to claim 1, wherein the first switching unit switches the first time-amplitude converters based on switching information which is preset in consideration of the dead times.

3. The time measuring apparatus according to claim 1 or 2, wherein the control unit derives the time information indicating a time until the detection signal is input by subtracting a time indicated by the measurement signal from a time corresponding to the count value indicated by the count signal.

4. The time measuring apparatus according to any one of claims 1 to 3, wherein the first switching unit switches the first time-amplitude converters so that the detection signal is input to the first time-amplitude converter which is not in the dead time.

5. The time measuring apparatus according to any one of claims 1 to 4, wherein the plurality of first time-amplitude converters are provided in a number corresponding to the dead times.

6. The time measuring apparatus according to any one of claims 1 to 5, wherein the plurality of first time-amplitude converters are provided in a number corresponding to the amount of signals detected by the detector.

7. The time measuring apparatus according to any one of claims 1 to 6, further comprising:
a second time-amplitude converter configured to output a signal corresponding to a synchronization signal of a phenomenon related to the detection signal detected by the detector,
wherein the control unit derives the time information further in consideration of the signal corresponding to the synchronization signal.

8. The time measuring apparatus according to claim 7, further comprising:
a plurality of the second time-amplitude converters; and
a second switching unit configured to switch the second time-amplitude converters to which the synchronization signal is input, in consideration of dead times of the second time-amplitude converters.

9. A fluorescence lifetime measuring apparatus that measures a lifetime of fluorescence emitted from a measurement target, the fluorescence lifetime measuring apparatus comprising:
the time measuring apparatus according to any one of claims 1 to 8;
a light source configured to irradiate the measurement target with generated light;
the detector configured to detect the fluorescence from the measurement target irradiated with the light from the light source and output the detection signal; and
a signal generation unit configured to control the output of light from the light source and output synchronization signals synchronized with the light source and the time measuring apparatus.

10. A time measuring method performed by a time measuring apparatus that measures a time while switching between a plurality of time-amplitude converters, the time measuring method comprising:
selecting one time-amplitude converter to which a detection signal detected by a detector is input, based on a dead time of each of the plurality of time-amplitude converters;
inputting the detection signal and a clock signal to the selected one time-amplitude converter to obtain a measurement signal corresponding to a time between the detection signal and the clock signal; and
deriving and outputting time information related to the detection signal based on the count signal corresponding to the clock signal and the measurement signal.

11. The time measuring method according to claim 10, wherein the selecting of the one time-amplitude converter includes selecting the time-amplitude converter which is not in the dead time.
